# EUROPÄISCHE PATENTSCHRIFT

(11) **EP 3 651 977 B1**
(45) Veröffentlichungstag und Bekanntmachung des Hinweises auf die Patenterteilung: **06.07.2022**
(21) Anmeldenummer: 18720244.5
(22) Anmeldetag: 26.04.2018
(51) Int. Cl.: B29D 30/56, B24B 7/06, B24B 7/30, B24B 19/22, B24B 41/06

(54) **VERFAHREN ZUR VERWENDUNG BEIM AUFRAUEN EINES FÜR EINE KALTRUNDERNEUERUNG VORGESEHENEN PROFILIERTEN LAUFSTREIFENS**
METHOD FOR THE USE IN ROUGHENING A PROFILED TREAD INTENDED FOR COLD RETREADING
DISPOSITIF DESTINÉ À ÊTRE UTILISÉ DANS LA RUGOSIFICATION D'UNE BANDE DE ROULEMENT PROFILÉE DESTINÉE À UN RECHAPAGE À FROID

(30) Priorität: 10.07.2017 DE 102017211759
(43) Veröffentlichungstag der Anmeldung: 20.05.2020
(73) Patentinhaber: Continental Reifen Deutschland GmbH, 30165 Hannover (DE)
(72) Erfinder: SALZMANN, Lucas, 30453 Hannover (DE); WONG, Ping-Keong, Puchong 47150 (MY)
(74) Vertreter: Continental Corporation
(86) Internationale Anmeldenummer: PCT/EP2018/060656
(87) Internationale Veröffentlichungsnummer: WO 2019/011493

(56) Entgegenhaltungen:
- WO-A1-2008/066534
- WO-A1-2010/002390
- WO-A1-2015/038450
- WO-A1-2016/108884
- WO-A2-2013/130070
- JP-A- 2013 237 231
- US-A- 3 908 318

## Beschreibung

Die Erfindung betrifft eine Vorrichtung zur Verwendung beim Aufrauen der Rückseite eines vulkanisierten, an der anderen Seite eine Profilierung mit Rillen und Profilpositiven mit Außenflächen aufweisenden, flachen Laufstreifens für eine Kaltrunderneuerung eines Reifens, welche Vorrichtung eine Stützeinrichtung umfasst, welche entlang des Verlaufes von Rillen verlaufende und den Laufstreifen am Grund dieser Rillen abstützende Stützelemente aufweist und auf welcher der Laufstreifen während des Aufrauens mit den Außenflächen seiner Profilpositive aufgelegt ist und wobei die Vorrichtung eine Fördereinrichtung aufweist, welche relativ zu einer zum Aufrauen verwendeten und in Rotation versetzbaren Bürste in Längsbewegung versetzbar ist.

Die Runderneuerung von Nutzfahrzeugreifen für unterschiedlichste Einsatzzwecke ist nach wie vor weit verbreitet, wobei vorrangig eine Runderneuerung im Kaltverfahren angewendet wird. Bei diesem Verfahren werden vulkanisierte, profilierte Laufstreifen mit Reifenkarkassen, von welchen die abgefahrenen Laufstreifen entfernt worden sind, verbunden. Die Verbindung zwischen der Reifenkarkasse und dem Laufstreifen erfolgt über eine Bindegummischicht. Der mit dem Laufstreifen belegte Reifen wird in einen Autoklav eingebracht, sodass die Bindegummischicht bei 95° bis 110° vulkanisiert wird und dadurch die Verbindung des Laufstreifens zum Reifen hergestellt wird. Zur Herstellung der Laufstreifen werden Vulkanisierpressanlagen verwendet, die jeweils mit einer Anzahl von beheizbaren Formen ausgestattet sind, welche im Zuge des Pressens und Vulkanisierens das Profil in Rohgummistreifen unter Bildung der vulkanisierten Laufstreifen einbringen. In den üblichen Vulkanisierpressanlagen werden flache, profilierte Laufstreifen entweder bereits in der erforderlichen Länge oder in größerer Länge hergestellt und anschließend auf die erforderliche Länge geschnitten. Der flach hergestellte Laufstreifen wird mit der Profilierung nach unten auf einer Fördereinrichtung positioniert, wobei seine Rückseite während der Längsbewegung der Fördereinrichtung mittels einer oberhalb der Fördereinrichtung stationär angeordneten, in Rotation versetzten Bürste aufgeraut wird. Anschließend wird eine Haftvermittlerschicht auf der Rückseite aufgebracht. Für die Runderneuerung von Nutzfahrzeugen vorgesehene Laufstreifen weisen oft eine Profilierung mit ausgeprägten und tiefen Rillen auf. Im Bereich der Rillen ist das Laufstreifenmaterial relativ dünn, sodass sich an der Rückseite des auf der Fördereinrichtung positionierten Laufstreifens durch das Eigengewicht des Laufstreifens entlang dieser Rillen flache Vertiefungen bilden. Je nach der Ausprägung der Vertiefungen ist das Aufrauen in diesen Bereichen mangelhaft oder, bei Reifen mit sehr tiefen und sehr breiten Umfangsrillen, auch gar nicht möglich. Eine ungleichmäßig aufgeraute Rückseite bedingt eine ungleichmäßige Klebrigkeit des Laufstreifens nach dem Aufbringen des Haftvermittlers, wodurch keine optimale Verbindung des Laufstreifens mit dem Bindegummi mehr möglich ist. Beim Endkunden, dem Runderneuerer, entsteht zudem der Eindruck, dass die Laufstreifen von minderer Qualität sind.

Eine Vorrichtung der eingangs genannten Art ist beispielsweise aus der WO 2008 066 524 A1 bekannt. Gemäß einer Variante weist die Vorrichtung eine rotierbare Bürste zum Aufrauen des Laufstreifens und eine rotierende Walze mit Erhebungen auf ihrer Oberfläche auf. Zum Aufrauen wird der Laufstreifen zwischen der Bürste und der Walze durchgeführt, wobei die Erhebungen der Walze in die Rillen des Laufstreifens eingreifen während Bürste die Rückseite des Laufstreifens aufraut.

Aus der JP 2013 237 231 A ist ein weiteres Verfahren zum Aufrauen der Rückseite eines vulkanisierten, an der anderen Seite eine Profilierung mit Rillen und Profilpositive mit Außenflächen aufweisenden, flachen Laufstreifens bekannt. Der Laufstreifen wird über ein umlaufendes Transportband geführt, auf welchem den Laufstreifen im Bereich der Rillen abstützende stegförmige Stützelemente ausgebildet sind.

Der Erfindung liegt die Aufgabe zugrunde, eine Vorrichtung bereitzustellen, mittels welcher in den kritischen, zum Einsinken neigenden Bereichen des Laufstreifens, also bei Rillen, ein besonders gleichmäßiges Aufrauen der Rückseite des Laufstreifens gewährleistet werden kann.

Gelöst wird die gestellte Aufgabe erfindungsgemäß dadurch, dass die Stützeinrichtung eine separate Stützeinrichtung ist, welche auf der Fördereinrichtung positioniert ist.

Die Erfindung ermöglicht daher auf besonders einfache und zweckmäßige Weise eine Abstützung des Laufstreifens während des Aufrauens seiner Rückseite, vor allem auch in jenen Bereichen, in welchen ein lokales Einsinken des Gummimaterials auftreten könnte oder ansonsten auftreten würde. Der Aufrauvorgang kann daher auf einer zumindest weitgehend ebenen Rückseite des Laufstreifens und qualitativ einwandfrei durchgeführt werden.

Durch entsprechende Positionierung der Bürste kann der Laufstreifen in üblicher Weise angeraut werden.

Besonders vorteilhaft ist eine Ausführung, bei welcher der Laufstreifen während des Aufrauens am Grund von Rillen abgestützt wird, die eine Mindesttiefe von 50 % der Profiltiefe und an der Außenseite des Laufstreifens eine Breite von mindestens 3,0 mm, insbesondere mindestens 8,0 mm, vorzugsweise von mindestens 10,0 mm aufweisen. Bevorzugt wird dabei der Laufstreifen am Grund sämtlicher Rillen mit diesen Abmessungen abgestützt.

Besonders anfällig für ein Einsinken ist der Laufstreifen in jenen Bereichen, wo Rillen verlaufen, die bis auf die Profiltiefe reichen und zumindest 3,0 mm, insbesondere zumindest 8,0 mm und vorzugsweise zumindest 10,0 mm breit sind.

Die die Stützelemente aufweisende Stützeinrichtung ist bei einer bevorzugten Ausführung ein profilierter Formeinsatz einer Vulkanisierpresse. Besonders vorteilhaft ist es, wenn die zur Vulkanisation von Laufstreifen qualitativ nicht mehr geeigneten Formeinsätze als Stützeinrichtungen Verwendung finden.

Bei einer alternativen Ausführung ist die Stützeinrichtung eine separat gefertigte Kunststoffform. Kunststoffformen sind relativ günstig herstellbar und werden bevorzugt derart ausgestaltet, dass sie Stützelemente für jene Rillen besitzen, bei welchen ein lokales Einsinken des Laufstreifmaterials eintreten könnte.

Bei einer weiteren Ausführung ist die Stützeinrichtung analog einem 3D-Nagelbrett ausgeführt und weist eine Vielzahl von ausfahrbaren Stiften auf, die in der ausgefahrenen Position arretierbar sind. Eine derartige Stützeinrichtung kann besonders gut an die jeweilige Ausgestaltung und den jeweiligen Verlauf der Rillen angepasst werden.

Bei einer weiteren bevorzugten Ausführung ist die Stützeinrichtung aus Stützelementen modular aufbaubar.

Weitere Merkmale, Vorteile und Einzelheiten der Erfindung werden nun anhand der schematischen Zeichnung näher beschrieben. Dabei zeigen
Fig. 1 einen Querschnitt eines für eine Kaltrunderneuerung vorgesehenen Laufstreifens bei einem Aufrauvorgang gemäß dem Stand der Technik und
Fig. 2 einen für eine Kaltrunderneuerung vorgesehenen Laufstreifen im Querschnitt beim Aufrauvorgang gemäß der Erfindung.

Die Kaltrunderneuerung ist eine formenunabhängige Vulkanisation bei einer Temperatur von 95° C bis 100° C unter Verwendung eines bereits vulkanisierten, profilierten Laufstreifens und einer unvulkanisierten Bindegummischicht. Die Verbindung zwischen der abgeschälten oder abgeschliffenen Reifenkarkasse, dem Bindegummi und dem Laufstreifen wird in einem Autoklav hergestellt. Zur Herstellung der flachen Laufstreifen werden Vulkanisierpressanlagen eingesetzt, die jeweils mit einer Anzahl von beheizbaren Formen ausgestattet sind, welche im Zuge des Pressens und Vulkanisierens eine Profilierung in einen Rohgummistreifen unter Bildung des vulkanisierten, für die Runderneuerung vorgesehenen Laufstreifens einbringen.

Die gemäß dem Umfang des betreffenden LKW-Reifens abgelängten oder bereits entsprechend hergestellten Laufstreifen 1 werden beim Laufstreifenhersteller an ihrer Rückseite 1b - diese ist die der profilierten Seite 1a abgewandte Seite - aufgeraut, mit einem Haftvermittler versehen und an den Rundemeuerer ausgeliefert. Durch das Aufrauen wird die Oberfläche vergrößert, um eine gute Verbindung des Laufstreifens zum Bindegummi zu gewährleisten.

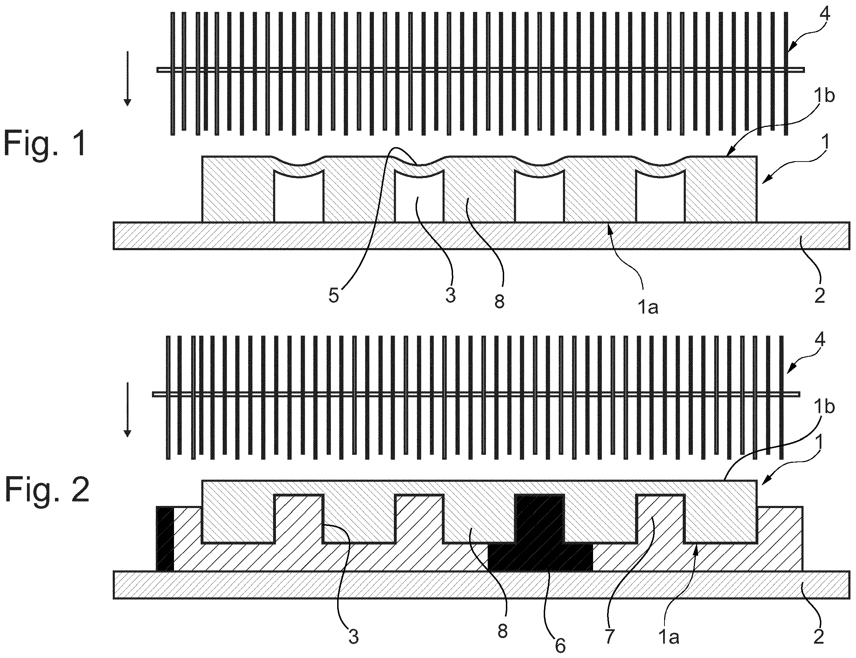

Fig. 1 veranschaulicht schematisch einen Aufrauvorgang gemäß dem Stand der Technik. Der vulkanisierte und profilierte Laufstreifen 1 ist mit seiner profilierten Seite 1a auf der ebenen Oberseite einer Fördereinrichtung 2, beispielsweise einem Förderband, positioniert. Von der Profilierung des Laufstreifens 1 sind beispielhaft vier Umfangsrillen 3 und Profilpositive 8, die beispielsweise Profilblöcke oder Profilrippen sind, dargestellt, wobei der Laufstreifen 1 mit den Außenflächen seiner Profilpositive 8 auf dem Förderband 2 aufliegt. In Fig. 1 ist ferner ein Teil einer oberhalb der Fördereinrichtung 2 befindlichen, in Rotationsbewegung versetzbaren Bürste 4 angedeutet, welche üblicherweise eine Drahtbürste ist. Beim Aufrauen ist die Fördereinrichtung 2 in Bewegung versetzt und transportiert dadurch den Laufstreifen relativ zur rotierenden Bürste 4, welche die Rückseite 1b entsprechend auftaut. Der Laufstreifen wird im Bereich seiner Rillen, in Fig. 1 beispielhaft die Umfangsrillen 3, durch die ebene Oberfläche der Fördereinrichtung nicht unterstützt. Das Gewicht des Laufstreifens 1 bewirkt, insbesondere bei tiefen, ausgeprägten Rillen das Entstehen von flachen Vertiefungen 5 im Bereich dieser Rillen. Je nach der Ausprägung der Vertiefungen 5 kann die Bürste 4 in diesen Bereichen nur unzulänglich oder auch gar nicht aufrauen. Die anschließend mit einem Haftvermittler behandelte Rückseite 1b besitzt dadurch eine ungleichmäßige, die Verbindung zum Bindegummi beeinträchtigende Klebekraft.

Fig. 2 zeigt die Verwendung einer separaten Stützeinrichtung 6 gemäß der Erfindung. Die Stützeinrichtung 6 wird vorzugsweise auf der Fördereinrichtung 2 positioniert und gemeinsam mit dem Laufstreifen 1 relativ zur Bürste 4 bewegt oder stationär verwendet, wobei die Bürste 4 relativ zum Laufstreifen 2 und zur Stützeinrichtung 6 bewegt wird. Die Stützeinrichtung 6 weist ebene Bereiche auf, an welchen der Laufstreifen 1 mit den Außenflächen seiner Profilpositive 8 aufliegt, sowie zumindest für einen Teil der Negative der Profilierung des Laufstreifens 1 Stützelemente 7 auf, vorzugsweise Stützelemente 7, die den Laufstreifen 1 zusätzlich am Rillengrund von Rillen abstützen, bei der gezeigten vereinfachten Ausführung am Rillengrund der Umfangsrillen 3. Dabei sind insbesondere solche Stützelemente 7 vorhanden, die jene Rillen am Rillengrund abstützen, die zumindest an einer Stelle bis auf zumindest 50% der Profiltiefe reichen, insbesondere an zumindest einer Stelle die Profiltiefe des Reifens aufweisen und, abgesehen vom Bereich einer etwaigen Rundung am Rillengrund, eine Mindestbreite von 3,0 mm, insbesondere von 8,0 mm, vorzugsweise von 10,0 mm aufweisen. Die Stützeinrichtung 6 weist vorzugsweise Stützelemente 7 auf, die als Positive der betreffenden Rillen 3 gestaltet sind.

Die Stützeinrichtung 6 kann auf unterschiedliche Weisen ausgeführt sein. Bei einer möglichen Ausführung ist die Stützeinrichtung 6 ein profilierter Formeinsatz einer Vulkanisierpresse, entweder ein neuer Formeinsatz oder ein Formeinsatz, welcher bereits benützt wurde und für die Vulkanisation von neuen Laufstreifen nicht mehr geeignet ist. Ein derartige Stützeinrichtung 6 stützt sämtliche Negative in der Profilierung des Laufstreifens 1 optimal ab. Die Stützeinrichtung 6 kann auch eine separat gefertigte Kunststoffform sein, die beispielsweise nur jene Negative des Laufstreifens 1 als Stützelemente 7 aufweist, die entsprechend dimensionierte Rillen sind, wie oben erwähnt, und die zu einer Verformung des Laufstreifens 1 unter Bilden von flachen Vertiefungen neigen oder führen. Die Stützeinrichtung 6 kann analog einem 3D - Nagelbrett ausgeführt sein und eine Vielzahl von senkrecht ausfahrbaren Stiften aufweisen, die in den Rillen des Laufstreifens die Stützelemente bilden. Die Betätigung und das Halten bzw. Arretieren der Stifte kann mittels Luftdruck erfolgen. Bei einer weiteren Ausführung ist die Stützeinrichtung 6 modular aufbaubar und an die Profilierung des Laufstreifens 1 anpassbar, insbesondere mittels Elementen, die im Bereich von breiten und tiefen Rillen als Stützelemente wirken und auf einer Unterlage entsprechend dem Verlauf und der Ausgestaltung der Rillen positioniert und fixiert werden können.

Als Material für die Stützeinrichtung bzw. deren Stützelemente kommen neben Metall, beispielsweise Aluminium oder Stahl, auch Kunststoffe in Frage.

### Bezugszeichenliste

- 1: Laufstreifen
- 1a: profilierte Seite
- 1b: Rückseite
- 2: Fördereinrichtung
- 3: Umfangsrille
- 4: Bürste
- 5: Vertiefung
- 6: Stützeinrichtung
- 7: Stützelement
- 8: Profilpositiv

## Patentansprüche

1. Vorrichtung zur Verwendung beim Aufrauen der Rückseite (1b) eines vulkanisierten, an der anderen Seite (1a) eine Profilierung mit Rillen (3) und Profilpositiven mit Außenflächen aufweisenden, flachen Laufstreifens (1) für eine Kaltrunderneuerung eines Reifens, welche Vorrichtung eine Stützeinrichtung (6) umfasst, welche entlang des Verlaufes von Rillen (3) verlaufende und den Laufstreifen (1) am Grund dieser Rillen (3) abstützende Stützelemente (7) aufweist und auf welcher der Laufstreifen (1) während des Aufrauens mit den Außenflächen seiner Profilpositive aufgelegt ist und wobei die Vorrichtung eine Fördereinrichtung (2) aufweist, welche relativ zu einer zum Aufrauen verwendeten und in Rotation versetzbaren Bürste (4) in Längsbewegung versetzbar ist,
**dadurch gekennzeichnet,**
**dass** die Stützeinrichtung (6) eine separate Stützeinrichtung (6) ist, welche auf der Fördereinrichtung (2) positioniert ist.

2. Vorrichtung nach Anspruch 1, **dadurch gekennzeichnet, dass** die Stützelemente (7) den Laufstreifen (1) am Grund von Rillen (3) abstützen, die eine Mindesttiefe von 50% der Profiltiefe und eine Mindestbreite 3,0 mm, insbesondere 8,0 mm, vorzugsweise von 10,0 mm, aufweisen.

3. Vorrichtung nach Anspruch 1 oder 2, **dadurch gekennzeichnet, dass** die Stützelemente (7) den Laufstreifen (1) am Grund von Rillen (3) abstützen, die an ihren tiefsten Stellen bis auf die Profiltiefe reichen und eine Mindestbreite 3,0 mm, insbesondere 8,0 mm, vorzugsweise von 10,0 mm, aufweisen.

4. Vorrichtung nach einem der Ansprüche 1 bis 3, **dadurch gekennzeichnet, dass** die Stützeinrichtung (6) ein profilierter Formeinsatz einer Vulkanisierpresse ist.

5. Vorrichtung nach einem der Ansprüche 1 bis 3, **dadurch gekennzeichnet, dass** die Stützeinrichtung (6) eine separat gefertigte Kunststoffform ist.

6. Vorrichtung nach einem der Ansprüche 1 bis 3, **dadurch gekennzeichnet, dass** die Stützeinrichtung (6) analog einem 3D - Nagelbrett ausgeführt sein und eine Vielzahl von ausfahrbaren Stiften aufweist, die in der ausgefahrenen Position arretierbar sind.

7. Vorrichtung nach einem der Ansprüche 1 bis 3, **dadurch gekennzeichnet, dass** die Stützeinrichtung (6) aus Stützelementen modular aufbaubar ist.

8. Vorrichtung nach einem der Ansprüche 1 bis 7, **dadurch gekennzeichnet, dass** die Stützelemente (7) als Positive der Rillen (3) ausgestaltet sind.

## Claims

1. Apparatus for use during roughening of the rear side (1b) of a vulcanized, flat tread strip (1) which on the other side (1a) has a profile with grooves (3) and positive profiles with outer surfaces for cold retreading of a tyre, which apparatus comprises a supporting device (6) which has supporting elements (7) which run along the course of grooves (3) and support the tread strip (1) at the bottom of the said grooves (3), and on which supporting device (6) the tread strip (1) is placed with the outer surfaces of its positive profiles during the roughening, and the apparatus having a conveying device (2) which can be set in a longitudinal movement relative to a brush (4) which is used for roughening and can be set in rotation,
**characterized**
**in that** the supporting device (6) is a separate supporting device (6) which is positioned on the conveying device (2).

2. Apparatus according to Claim 1, **characterized in that** the supporting elements (7) support the tread strip (1) at the bottom of grooves (3) which have a minimum depth of 50% of the profile depth and a minimum width of 3.0 mm, in particular 8.0 mm, preferably of 10.0 mm.

3. Apparatus according to Claim 1 or 2, **characterized in that** the supporting elements (7) support the tread strip (1) at the bottom of grooves (3) which, at their deepest points, reach as far as the profile depth and have a minimum width of 3.0 mm, in particular 8.0 mm, preferably of 10.0 mm.

4. Apparatus according to one of Claims 1 to 3, **characterized in that** the supporting device (6) is a profiled mould insert of a vulcanizing press.

5. Apparatus according to one of Claims 1 to 3, **characterized in that** the supporting device (6) is a separately manufactured plastic mould.

6. Apparatus according to one of Claims 1 to 3, **characterized in that** the supporting device (6) is configured in an analogous manner with respect to a 3D needle board and has a multiplicity of extendable pins which can be locked in the extended position.

7. Apparatus according to one of Claims 1 to 3, **characterized in that** the supporting device (6) can be constructed in a modular manner from supporting elements.

8. Apparatus according to one of Claims 1 to 7, **characterized in that** the supporting elements (7) are configured as positives of the grooves (3).

## Revendications

1. Dispositif destiné à être utilisé lors de la rugosification du côté arrière (1b) d'une bande de roulement plate (1) vulcanisée, présentant sur l'autre côté (1a) un profilage comprenant des rainures (3) et des composants positifs de profil comprenant des surfaces extérieures, pour un rechapage à froid d'un pneu, lequel dispositif comprend un appareil de support (6), qui présente des éléments de support (7) s'étendant le long de l'extension de rainures (3) et supportant la bande de roulement (1) au fond de ces rainures (3) et sur lequel la bande de roulement (1) est placée pendant la rugosification avec les surfaces extérieures de ses composants positifs de profil, et le dispositif présentant un appareil de transport (2), qui peut être déplacé en mouvement longitudinal par rapport à une brosse (4) utilisée pour la rugosification et pouvant être déplacée en rotation,
**caractérisé en ce que** l'appareil de support (6) est un appareil de support (6) séparé qui est positionné sur l'appareil de transport (2).

2. Dispositif selon la revendication 1, **caractérisé en ce que** les éléments de support (7) supportent la bande de roulement (1) au fond de rainures (3) qui présentent une profondeur minimale de 50 % de la profondeur de profil et une largeur minimale de 3,0 mm, notamment de 8,0 mm, de préférence de 10,0 mm.

3. Dispositif selon la revendication 1 ou 2, **caractérisé en ce que** les éléments de support (7) supportent la bande de roulement (1) au fond de rainures (3) qui atteignent la profondeur de profil à leurs points les plus profonds et présentent une largeur minimale de 3,0 mm, notamment de 8,0 mm, de préférence de 10,0 mm.

4. Dispositif selon l'une quelconque des revendications 1 à 3, **caractérisé en ce que** l'appareil de support (6) est un insert de moule profilé d'une presse de vulcanisation.

5. Dispositif selon l'une quelconque des revendications 1 à 3, **caractérisé en ce que** l'appareil de support (6) est un moule en matière plastique fabriqué séparément.

6. Dispositif selon l'une quelconque des revendications 1 à 3, **caractérisé en ce que** l'appareil de support (6) est réalisé de manière analogue à une planche à clous 3D et présente une pluralité de broches déployables qui peuvent être bloquées dans la position déployée.

7. Dispositif selon l'une quelconque des revendications 1 à 3, **caractérisé en ce que** l'appareil de support (6) peut être assemblé de façon modulaire à partir d'éléments de support.

8. Dispositif selon l'une quelconque des revendications 1 à 7, **caractérisé en ce que** les éléments de support (7) sont conçus sous forme de composants positifs des rainures (3).
